# FASCICULE DE BREVET EUROPEEN

(11) **EP 2 537 286 B1**
(45) Date de publication et mention de la délivrance du brevet: **09.04.2014**
(21) Numéro de dépôt: 11704442.0
(22) Date de dépôt: 17.02.2011
(51) Int. Cl.: H04L 9/32, H04W 12/06, H04L 29/06

(54) **PROCÉDÉ D'AUTHENTIFICATION BIOMÉTRIQUE, SYSTÈME D'AUTHENTIFICATION ET PROGRAMME CORRESPONDANT**
VERFAHREN ZUR BIOMETRISCHEN AUTHENTIFIZIERUNG, AUTHENTIFIZIERUNGSSYSTEM UND ZUGEHÖRIGES PROGRAMM
METHOD FOR BIOMETRIC AUTHENTICATION, AUTHENTICATION SYSTEM AND CORRESPONDING PROGRAM

(30) Priorité: 01.03.2010 FR 1051464; 19.02.2010 FR 1051216
(43) Date de publication de la demande: 26.12.2012
(73) Titulaire: Compagnie Industrielle et Financière d'Ingénierie "Ingenico", 92200 Neuilly sur Seine (FR)
(72) Inventeur: NACCACHE, David, F-75018 Paris (FR)
(74) Mandataire: Le Saux, Gaël
(86) Numéro de dépôt international: PCT/EP2011/052349
(87) Numéro de publication internationale: WO 2011/101407

(56) Documents cités:
- EP-A1- 1 696 626
- WO-A1-2009/128854
- WO-A2-2006/128171
- WO-A2-2008/002979
- US-A1- 2003 140 246
- US-A1- 2006 120 568
- US-B1- 6 591 242

## Description

### 1. Domaine de l'invention

Le domaine de l'invention est celui de l'authentification d'utilisateurs par biométrie.

Plus précisément, l'invention concerne les systèmes d'authentification biométrique permettant aux utilisateurs d'effectuer une action prédéterminée, comme par exemple réaliser un paiement.

### 2. Art antérieur

La biométrie est couramment utilisée afin d'identifier et/ou authentifier des utilisateurs sur la base de caractéristiques physiques individuelles.

Une telle identification par biométrie, mise en oeuvre par un système d'authentification biométrique, comprend les trois étapes principales suivantes :
- capture d'un échantillon biométrique de référence provenant de l'utilisateur autorisé (par exemple une image de référence d'un utilisateur autorisé) ;
- création d'un fichier de référence, ou « signature de référence » (qui comprend au moins un élément caractéristique de l'image de référence), par un traitement spécifique appliqué à l'échantillon biométrique de référence, puis stockage de ce fichier de référence ;
- vérification dans laquelle, de la même manière que dans les étapes de capture et de création précitées, on réalise une capture d'un échantillon biométrique à comparer provenant de l'utilisateur à authentifier et une création d'un fichier à comparer, ou « signature à comparer », puis une comparaison du fichier de référence au fichier à comparer pour déterminer leur taux de similitude et prendre la décision qui s'impose.

Ainsi, les informations stockées ne sont pas les échantillons biométriques, mais des modèles mathématiques de ces échantillons qui distinguent un échantillon biométrique d'un autre. Ce modèle est appelé une « signature » ou un « gabarit ».

La création d'une signature de référence s'effectue pendant une phase dite d'enrôlement (ou d'apprentissage) qui regroupe les étapes de capture de l'échantillon biométrique de référence, de création et de stockage de la signature de référence et de stockage d'informations sur l'identité de l'utilisateur comme son nom, son prénom, son identifiant (numéro d'identification personnel).

L'authentification d'un utilisateur par biométrie peut notamment se baser sur la mesure (ou capture) d'au moins un des échantillons biométriques suivants, ou une combinaison d'un ou plusieurs des échantillons biométriques suivants :
- son empreinte digitale ;
- son empreinte palmaire (empreinte de la main) ;
- l'empreinte de sa rétine ;
- l'empreinte de son iris ;
- l'empreinte de son visage (la forme du visage) ;

Un inconvénient de ces systèmes d'authentification biométrique de l'art antérieur réside dans leur lenteur quand ils sont utilisés pour référencer un grand nombre d'utilisateurs (par exemple pour contrôler l'accès au métro dans une grande agglomération ou authentifier un utilisateur d'une carte bancaire).

En effet, la durée de l'étape de vérification, pendant laquelle la décision d'authentification proprement dite est prise, dépend du nombre d'utilisateurs référencés dans le système d'authentification. Plus le nombre d'utilisateurs référencés est important, et plus le nombre de comparaisons potentielles à effectuer pour déterminer ou non l'authentification d'un utilisateur est important.

Ainsi, plus le nombre d'utilisateurs référencés est grand, et plus le système est lent. De plus, l'accroissement du nombre d'utilisateurs tend à augmenter la probabilité de collision entre données biométriques et donc la fiabilité générale du système (phénomène connu de l'homme de l'art sous le vocable de « faux positif »).

Un corollaire de ce dernier inconvénient est qu'il est difficile de mettre en oeuvre une méthode de paiement à l'aide de données biométriques. En effet, pour pouvoir mettre en place une telle méthode de paiement, il est nécessaire de comparer les données biométriques de l'utilisateur à un grand nombre de données biométriques d'autres utilisateurs, données qui appartiennent de façon très probable aux établissement financiers et qu'il peut donc s'avérer complexe d'obtenir. Or l'utilisateur, par principe, ne doit pas divulguer d'informations relatives à la banque dont il est le client et la comparaison des données biométriques de l'utilisateur doit être réalisée sur l'ensemble des données enregistrées dans le système d'authentification.

L'invention s'applique tout particulièrement à des dispositifs mobiles tels que les téléphones mobiles, les GPS portables, les assistants numériques personnels (dits PDAs), les ordinateurs portables et tous autres appareils (« Dispositif Mobile » ) ayant vocation à communiquer via un réseau de télécommunication mobile, à disposer ou être la source d'une information de localisation précise ou approximative et à être généralement à portée de main de leurs propriétaires.

L'invention s'applique également, dans au moins un mode de réalisation, des dispositifs de vérification et d'acquisition de transactions tels que les terminaux de paiement et de vérification d'identité, les serrures électroniques, les caisses enregistreuses et les bornes de contrôle d'accès ou les bornes de transports en commun (« Terminal Transactionnel »). Ces dispositifs ayant vocation à communiquer via un réseau de télécommunication et à avoir une localisation géographique précise ou approximative connue de leurs gestionnaires.

Le document de brevet US 6 591 242 B1 par E. Karp publié le 8 juillet 2003 expose un système de tracement d'un utilisateur lorsqu'il traverse des endroits prédéterminés employant des paramètres biométriques pour son authentification.

Le document de brevet WO 2009/128854 A1 par W. Camp et assigné à Sony Ericsson Mobile Comm AB publié le 22 octobre 2009 expose une base de données indexée sur un identificateur de station de base au sein d'un procédé d'authentification.

Le document de brevet US 2003/140246 A1 par D. Kammer publié le 24 juillet 2003 expose une base de données de règles de sécurité indexée sur la position du dispositif.

Les documents de brevet WO 2006/128171 A2 par G. Di Mambro et al. et assigné à Porticus Technology Inc publié le 30 novembre 2006, et US 2006/120568 A1 par P. McConville publié le 8 juin 2006 exposent des procédés d'authentification biométrique au sein desquels on saisit la position de l'utilisateur.

### 3. Objectifs de l'invention

L'invention a notamment pour objectif de pallier ces inconvénients de l'art antérieur.

Plus précisément, un objectif de l'invention, dans au moins un de ses modes de réalisation, est de fournir une technique d'authentification biométrique qui soit rapide et fiable, dans le cas d'un système référençant un très grand nombre d'utilisateurs, pour permettre à l'utilisateur de réaliser une action comme un paiement.

L'invention a ainsi pour objectif de fournir une telle technique qui soit également ergonomique pour l'utilisateur.

Un autre objectif de l'invention est de fournir une telle technique qui soit peu coûteuse et facile à mettre en oeuvre.

### 4. Exposé de l'invention

L'invention propose une solution nouvelle qui ne présente pas l'ensemble de ces inconvénients de l'art antérieur, sous la forme d'un procédé d'authentification biométrique d'un utilisateur à authentifier parmi une pluralité d'utilisateurs auprès d'un système d'authentification stockant un ensemble de données biométriques de référence associées chacune à un desdits utilisateurs, comprenant les étapes de :
- fourniture par ledit utilisateur à authentifier, d'une donnée biométrique d'authentification, à l'aide d'un dispositif d'obtention de données biométriques d'un terminal transactionnel ;
- recherche parmi un sous-ensemble dudit ensemble de données biométriques de référence stockées par ledit système d'authentification, d'une donnée biométrique de référence correspondant audit utilisateur à authentifier, en fonction de ladite donnée biométrique d'authentification,

Selon l'invention, ladite étape de recherche comprend une étape de filtrage desdites données dudit ensemble de données biométriques en fonction :
- d'une station de base d'un réseau de communication mobile ; et
- d'un ensemble de dispositifs mobiles pour lesquels un indicateur de connexion est activé pour ladite station de base,
et ledit terminal transactionnel étant sensiblement proche d'une zone de couverture de ladite station de base.

Ainsi, l'invention permet de restreindre fortement le nombre de données biométriques de référence pour lesquelles il est nécessaire de réaliser une comparaison avec les données biométriques fournies par l'utilisateur à authentifier. Cette restriction permet d'accélérer fortement le processus d'authentification et par exemple de réaliser un paiement en utilisant le procédé d'authentification de l'invention. En effet, le nombre de dispositifs mobiles connectés simultanément à une station de base est extrêmement réduit par rapport à un nombre potentiel d'utilisateurs pour lesquels il serait obligatoire de réaliser la recherche sans le procédé de l'invention. L'opération d'authentification, et donc l'opération de paiement est donc beaucoup plus rapide. Cette opération d'authentification est également beaucoup plus sécurisée puisque la localisation implicite du dispositif mobile de l'utilisateur (le dispositif mobile est également connecté à la station de base, sans quoi l'étape de recherche est infructueuse), assure que l'utilisateur qui souhaite réaliser le paiement se trouve bien à l'emplacement où l'authentification a lieu.

L'intérêt de ce procédé d'authentification n'est bien entendu pas limité au paiement. Il est tout à fait possible de mettre en oeuvre un tel procédé pour réaliser un contrôle d'accès basé sur la détention d'un dispositif mobile, par exemple dans le cas d'un accès à une entreprise. La station de base est alors remplacée par un point d'accès WiFi et le dispositif mobile doit alors posséder des capacités de connexion WiFi.

Ainsi, l'invention repose sur une approche nouvelle et inventive de l'authentification biométrique dans un système référençant un très grand nombre (par exemple des millions) d'utilisateurs, selon laquelle les informations de référence associées aux utilisateurs du système sont filtrées en fonction des utilisateurs disposant d'un dispositif mobile connectés à une station de base dont la zone de couverture couvre l'emplacement du terminal transactionnel. Ainsi, le nombre d'utilisateurs pour lesquels il est nécessaire de comparer les données biométriques est restreint en fonction de la localisation même de l'utilisateur qui effectue l'action, comme le paiement. Il n'est donc plus nécessaire de comparer les données biométriques de l'utilisateur avec un très grand nombre de données biométriques, mais avec un nombre beaucoup plus restreint (de l'ordre du millier), ce qui est nettement plus rapide et comporte beaucoup moins de risques de faux positifs.

Ainsi, l'authentification de l'utilisateur est réalisée sur un sous-ensemble dudit ensemble de données biométriques de référence, identifié par la station de base du réseau de communication de l'opérateur de communication ou du fournisseur de services.

Cette approche permet une identification rapide d'un utilisateur, y compris dans un système comprenant un très grand nombre d'utilisateurs référencés, par le filtrage de l'ensemble des informations de référence en procédant à sa partition en plusieurs sous-ensembles.

Selon un mode de réalisation particulier de l'invention, ladite étape de filtrage comprend :
- une étape d'identification de ladite station de base couvrant ladite zone de couverture dans laquelle ledit terminal transactionnel se situe ;
- une étape d'identification dudit ensemble de dispositifs mobiles pour lesquels un indicateur de connexion est activé pour ladite station de base, délivrant un ensemble d'identifiants de dispositifs mobiles candidats ;
- une étape d'obtention dudit sous-ensemble dudit ensemble de données biométriques de référence en fonction dudit ensemble d'identifiants des dispositifs mobiles candidats.

Selon une caractéristique particulière de l'invention lesdites données biométriques appartiennent au groupe comprenant :
- les empreintes digitales ;
- les empreintes palmaires ;
- les empreintes de rétine ;
- les empreintes d'iris ;
- les formes de visage ;
- les combinaisons desdites informations biométriques précitées.

Selon un mode de réalisation particulier de l'invention, ledit procédé d'authentification biométrique comprend en outre une étape de saisie, par ledit utilisateur, d'un code confidentiel.

Ainsi, l'invention permet de conforter l'assertion d'authentification qui a été délivrée suite à la recherche et suite à la comparaison des données biométriques de l'utilisateur.

Selon un mode de réalisation particulier de l'invention, ladite étape de filtrage comprend en outre une étape de saisie d'une information représentative du sexe dudit utilisateur.

Ainsi, on divise statistiquement par deux le temps nécessaire à l'authentification. Cette étape de saisie a lieu sur le terminal transactionnel.

Selon un mode de réalisation particulier de l'invention, ladite étape de filtrage comprend en outre une étape de sélection d'un opérateur téléphonique auprès duquel ledit dispositif mobile dudit utilisateur est enregistré.

Ainsi, la mise ne oeuvre de l'invention n'est pas limitée à un seul opérateur téléphonique. Cette étape de saisie a lieu sur le terminal transactionnel.

Selon une caractéristique particulière de l'invention, ledit procédé comprend en outre une étape de saisie, par ledit utilisateur, d'un code confidentiel.

Selon une caractéristique particulière de l'invention, ledit code confidentiel est transmis audit système d'authentification concomitamment audites données biométriques fournies par ledit utilisateur.

Selon un mode de réalisation particulier de l'invention, ledit terminal transactionnel est un terminal de paiement mobile connecté audit réseau de communication mobile auquel appartient ladite station de base.

Selon une caractéristique particulière de l'invention ledit terminal transactionnel est connecté à ladite station de base.

Selon un mode de réalisation particulier de l'invention, ledit procédé comprend en outre une étape de transmission, audit terminal transactionnel, dudit sous ensemble dudit ensemble de données biométriques et en ce que ladite étape de filtrage est mise en oeuvre au sein dudit terminal transactionnel.

Selon un mode de réalisation particulier de l'invention, ledit procédé comprend en outre une étape de transmission vers une station de base de destination à laquelle ledit utilisateur est susceptible de se connecter, desdites données biométriques concernant ledit utilisateur, ladite transmission étant réalisée à partir d'une station de base courante à laquelle ledit utilisateur est connecté.

L'invention concerne également un système d'authentification biométrique d'un utilisateur à authentifier parmi une pluralité d'utilisateurs auprès d'un système d'authentification stockant un ensemble de données biométriques de référence associées chacune à un desdits utilisateurs, comprenant des moyens de :
- fourniture par ledit utilisateur à authentifier, d'une donnée biométrique d'authentification, à l'aide d'un dispositif d'obtention de données biométriques d'un terminal transactionnel ;
- recherche parmi un sous-ensemble dudit ensemble de données biométriques de référence stockées par ledit système d'authentification, d'une donnée biométrique de référence correspondant audit utilisateur à authentifier, en fonction de ladite donnée biométrique d'authentification,

Selon l'invention lesdits moyens de recherche comprennent des moyens de filtrage desdites données dudit ensemble de données biométriques en fonction :
- d'une station de base d'un réseau de communication mobile ; et
- d'un ensemble de dispositifs mobiles pour lesquels un indicateur de connexion est activé pour ladite station de base,
et ledit dispositif d'obtention de données biométriques est sensiblement proche d'une zone de couverture de ladite station de base.

L'invention concerne également un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé d'authentification biométrique décrit précédemment.

### 5. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 présente le contexte de mise en oeuvre du procédé d'authentification biométrique selon l'invention ;
- la figure 2 illustre les étapes d'un mode de réalisation particulier du procédé selon l'invention.

### 6. Description d'un mode de réalisation de l'invention

### 6.1 Principe général

Le principe général de l'invention repose sur la délégation de la localisation et de l'identification d'un utilisateur à une pluralité d'équipements d'un réseau de communication afin de faciliter la délivrance d'une assertion d'authentification sur la base de données biométriques fournies par l'utilisateur. Ces données biométriques sont comparées à un ensemble de données biométriques relatives aux utilisateurs référencés dans un système d'authentification biométrique. Selon l'invention, la localisation géographique de l'utilisateur, par exemple par l'intermédiaire de son dispositif mobile (téléphone mobile, PDA, tablette), permet de réduire de façon drastique le nombre de comparaison à réaliser pour d'une part identifier et d'autre part authentifier l'utilisateur.

L'une des caractéristiques principales des réseaux de terminaux mobiles est qu'un dispositif mobile, quel qu'il soit, est en permanence couvert par une station de base (appelée « BTS » pour « Base Transceiver Station°»).

Quand un appareil sort de la zone de couverture d'une station de base, il est transféré à une autre station de base. Ce transfert est effectué afin d'améliorer la qualité du signal.

En d'autres termes, l'opérateur de télécommunication connaît en temps réel la position géographique approximative d'un dispositif mobile dans le réseau de télécommunication mobile : le dispositif mobile se situe dans la zone de couverture de la station de base auquel il est attaché.

Le procédé de l'invention, de façon générale, tire parti de cette localisation. Le procédé de l'invention permet d'une part d'utiliser un dispositif mobile détenu par l'utilisateur comme un vecteur permettant l'authentification et d'autre part d'éviter les problèmes de lenteur et de collision (faux positifs) inhérents aux systèmes d'authentification référençant un très grand nombre d'utilisateurs, notamment les systèmes d'authentification biométriques. De plus, le procédé de l'invention fonctionne quelques soit le type de dispositif mobile de l'utilisateur ; il n'est pas nécessaire, pour l'utilisateur de disposer d'un dispositif mobile de dernière génération ou très sophistiqué pour pouvoir profiter des avantages apportés par l'invention.

De tels systèmes peuvent être utilisés pour réaliser des paiements simplement, sans qu'il soit nécessaire pour un utilisateur d'utiliser une carte bancaire ou de disposer d'un dispositif mobile particulier.

De tels systèmes peuvent également être utilisés pour contrôler l'accès à un bâtiment, entreprise, zone géographique, spectacle, événement, installation ou moyen de transport dans une grande agglomération, et ainsi référencer un très grand nombre d'utilisateurs.

On considère par la suite, pour illustrer le procédé selon l'invention, un tel système permettant de réaliser, par authentification biométrique, un paiement dans un centre commercial. Dans ce cas, un utilisateur souhaitant réaliser un achat est authentifié grâce d'une part à son dispositif mobile et d'autre part à une ou plusieurs caractéristiques biométriques.

Selon l'invention, afin d'éviter une lenteur trop importante du système, et de permettre aux utilisateurs référencés de ne pas être ralentis par l'authentification biométrique et donc de réaliser rapidement la transaction, une localisation du dispositif mobile de l'utilisateur est réalisée.

Plus particulièrement, cette information de localisation est obtenue par une comparaison des données biométriques de l'utilisateur à un nombre restreint de données biométriques, à savoir aux données biométriques d'autres utilisateurs qui se situent dans la même zone de localisation que l'utilisateur, c'est-à-dire connectés à un même équipement de l'opérateur de communication, comme par exemple une station de base. En règle générale, le nombre maximum d'utilisateurs connectés à une station de base est de l'ordre du millier. On réalise donc un filtrage des données biométriques à comparer à celles fournies par l'utilisateur.

Ainsi, au lieu de vérifier l'authenticité d'un utilisateur parmi tous les utilisateurs référencés, ce qui est très consommateur de temps et susceptible de « faux positifs », le procédé selon l'invention permet de vérifier l'authenticité d'un utilisateur dans un sous-ensemble d'utilisateurs référencés (de l'ordre du millier), réduisant ainsi la durée de l'authentification et son efficacité.

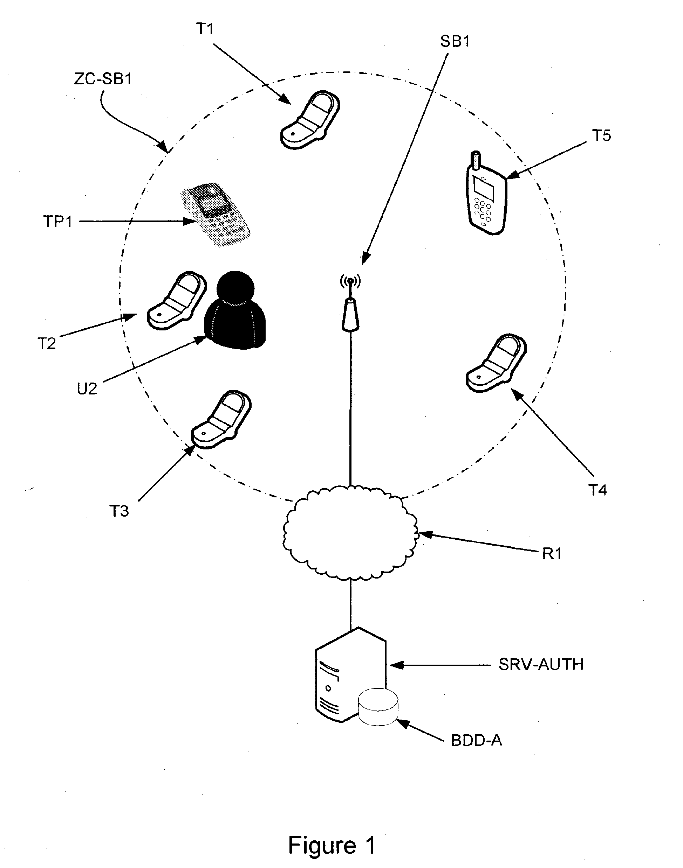

On présente, en relation avec la figure 1, un contexte technique général de mise en oeuvre du procédé de l'invention. Une station de base (SB1) est connectée, par l'intermédiaire d'un réseau de communication (R1), à un serveur d'authentification (SRV-AUTH). La station de base possède une zone de couverture (ZC-SB1) au sein de laquelle des dispositifs mobiles sont identifiés et connectés ou récemment connectés (par exemple les terminaux T1 à T5). La connexion d'un dispositif est définie par la présence d'un indicateur de connexion du dispositif mobile. Par exemple, si le dispositif mobile est connecté, un indicateur de connexion est positionné. Si le dispositif mobile était connecté récemment (par exemple moins de cinq minutes) un indicateur de connexion est également positionné pour ce dispositif mobile. Le serveur d'authentification (SRV-AUTH), qui dans un mode de réalisation spécifique de l'invention peut être le MSC (de l'anglais pour « Mobile services Switching Center ») ou le VLR (de l'anglais pour « Visitor Location Register ») ou le HLR (de l'anglais pour « Home Location Register ») comprend une base de données biométriques (BDD-A) comprenant plus particulièrement des données biométriques d'utilisateurs de dispositifs mobiles. Lorsque le serveur d'authentification est le MSC, celui-ci contient avantageusement les données biométriques des seuls terminaux T1 à T5 connectés à la station de base (SB1). Dans le cadre de la mise en oeuvre de l'invention, on dispose également d'un terminal transactionnel TP1 qui se situe dans la zone de couverture (ZC-SB1) de la station de base (SB1) et qui comprend des moyens d'obtention de données biométriques (comme un scanner d'empreintes digitales). Dans le cadre de cet exemple, on considère que l'utilisateur U2, qui dispose du dispositif mobile T2 souhaite effectuer un achat et régler celui-ci en utilisant le terminal transactionnel TP1. Bien évidement, ce système peut être mis en oeuvre dans d'autres cas de figures, comme l'authentification à un poste frontière, l'accès à une zone sécurisée. De manière générale, dans le cadre de l'invention, le terminal transactionnel comprend ou est connecté à un dispositif d'obtention de données biométriques. Dans de nombreux cas, le terminal transactionnel intègre directement le dispositif d'obtention de données biométriques

Préalablement à la conduite de l'identification et de l'authentification de l'utilisateur selon l'invention, il est prévu une phase d'enregistrement de l'utilisateur qui souhaite bénéficier des avantages fournis par l'invention auprès d'un fournisseur de services, comme un opérateur de communication.

Au cours de cette phase d'enregistrement, l'utilisateur entre autres données, exhibe un document d'identité, sélectionne ou obtient un code confidentiel (par exemple un code comprenant quatre caractères décimaux) et une ou plusieurs données biométriques dites de référence (par exemple une empreinte digitale). Ces données sont enregistrées de manières appropriées par le fournisseur de services. Cette phase d'enregistrement peut être réalisée soit par l'intermédiaire d'un service Web auquel l'utilisateur se connecte, soit de manière préférentielle physiquement, au sein d'un emplacement dédié par le fournisseur de services, par exemple pour obtenir les informations biométriques de manière sécurisée.

Parmi les avantages procurés par l'invention, on trouve les avantages suivants :
- totalement dépourvu de la nécessité de s'équiper de nouveau matériel : il n'est pas nécessaire de fournir un nouveau matériel à l'utilisateur. Cette solution est donc économiquement très intéressante.
- la solution de l'invention est totalement « main libre » : durant l'opération de paiement, l'utilisateur n'utilise que sa main. Il n'a pas besoin de sortir son téléphone de sa poche ni d'extraire une carte bancaire de son portefeuille (moins de risques de vol).
- fonctionne avec absolument n'importe quel téléphone : il n'est pas nécessaire de changer de dispositif mobile pour que le système fonctionne.

Le simple fait de disposer d'un dispositif mobile suffit.
- le système est simple pour l'utilisateur, ce qui permet une adoption rapide.
- le système est sûr : pour pouvoir frauder, il est nécessaire d'une part de voler le dispositif mobile de l'utilisateur, de lui couper le doigt (lorsque les données biométriques sont représentatives d'une empreinte digitale) et de déterminer son code confidentiel. La fraude est donc très peu probable.
- enfin, les opérateurs de télécommunication sont toujours à la recherche de moyens de limiter la volatilité de leurs abonnés (en d'autres termes, à fidéliser les abonnés), le fait d'associer des fonctions de paiement à un dispositif mobile est de nature à affaiblir la volatilité et fidéliser l'abonné.

### 6.2 Description d'un mode de réalisation

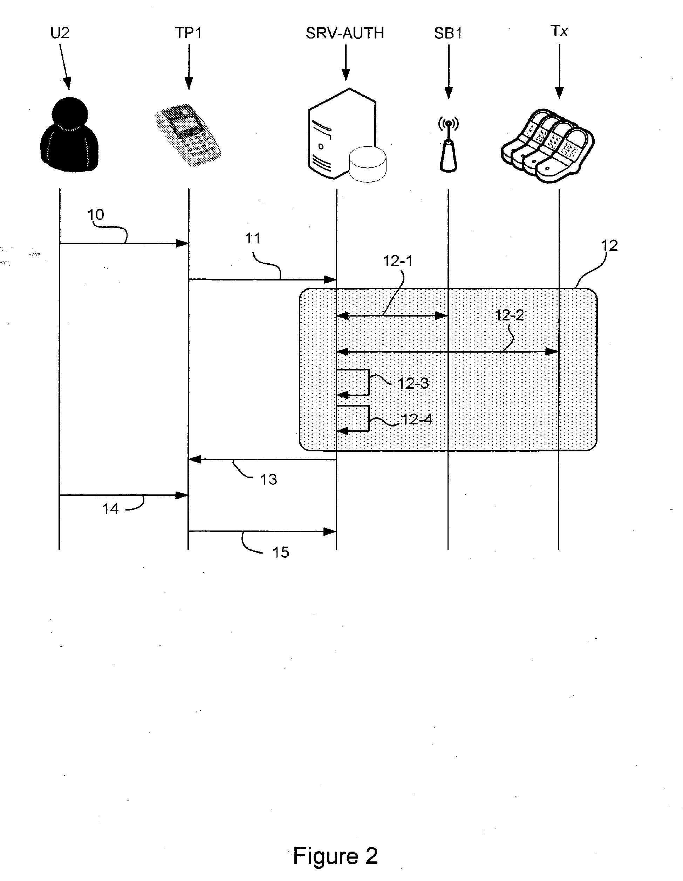

On présente maintenant, en relation avec la figure 2, les principales étapes du procédé d'authentification biométrique selon l'invention dans lequel le terminal transactionnel est un terminal de paiement permettant de réaliser des achats et le dispositif mobile est un téléphone. Ce terminal transactionnel comprend, dans ce mode de réalisation, un dispositif d'obtention de données biométrique, qui est par exemple un lecteur d'empreintes digitales.

De manière générale, au moment de réaliser un achat, un utilisateur doit fournir deux informations par l'interface du système d'authentification, comme le terminal transactionnel :
- une donnée biométrique d'authentification 10 ;
- une information de confirmation du paiement 14 (comme un code confidentiel, ou encore uniquement une validation de type « OK »).

L'information biométrique d'authentification 10 est utilisée lors d'une étape de recherche 12 du dispositif mobile de l'utilisateur, parmi une pluralité de terminaux mobiles connectés à une station de base dont dépend le terminal transactionnel utilisé pour fournir la donnée biométrique. Cette recherche est effectuée en comparant la donnée biométrique d'authentification à une pluralité de données biométriques de référence préalablement stockées au sein du réseau de l'opérateur.

Plus précisément, dans un premier mode de réalisation de l'invention, le procédé d'authentification biométrique comprend les étapes suivantes :
- une étape d'obtention 10 d'une donnée biométrique de l'utilisateur (par exemple une empreinte digitale obtenue à partir d'un lecteur d'empreinte idoine monté par exemple sur un terminal transactionnel) ;
- une étape de transmission 11 de la donnée biométrique à un serveur d'authentification (qui peut par exemple être situé au sein du réseau de télécommunication géré par l'opérateur de communication). Dans ce mode de réalisation, la transmission de la donnée biométrique s'accompagne de la transmission du montant de la transaction préalablement saisi par le commerçant chez qui l'utilisateur souhaite réaliser un achat.
- une étape de recherche 12, de la donnée biométrique de référence correspondant à la donnée biométrique précédemment obtenue, parmi la pluralité de données biométriques de référence correspondant à la pluralité d'utilisateurs connectés à la station de base de l'opérateur de communication. On réalise ainsi un filtrage intelligent des données biométriques de référence à comparer.

Cette étape de recherche/filtrage comprend plusieurs étapes :
- une étape d'obtention 12-1 d'au moins un identifiant de station de base de référence dans la zone de laquelle le dispositif d'obtention de données biométriques (par exemple le terminal transactionnel) est situé ;
- une étape d'obtention 12-2 d'un ensemble d'identifiants de dispositifs mobiles connectés à ladite au moins une station de base de référence ;
- une étape d'obtention 12-3 d'une pluralité de données biométriques à partir des identifiants de dispositifs mobiles, qui correspond au filtrage à proprement parlé ;
- une étape de comparaison 12-4 des ces données biométriques à la donnée biométrique obtenue par le dispositif d'obtention de données biométriques.
- lorsque le dispositif mobile de l'utilisateur est identifié, à partir de la donnée biométrique obtenue de la part de l'utilisateur et l'ensemble des données biométriques des utilisateurs dont les terminaux sont connectés à la station de base de référence, le procédé comprend une étape de transmission 13 d'une requête d'obtention d'un code confidentiel à l'utilisateur, suivie d'une étape de saisie 14 de ce code confidentiel et d'une étape de validation de la transaction 15.
- ce code confidentiel est le code fourni au cours de la phase d'enregistrement ;
   le code confidentiel est saisi sur le terminal transactionnel, comme à l'accoutumée, par l'utilisateur.
- le code confidentiel est vérifié et la transaction est validée par l'opérateur : il débite le compte de l'utilisateur et crédite le compte du commerçant.

Si l'étape de recherche ne permet pas d'identifier le dispositif mobile de l'utilisateur comme étant connecté à une station de base, plusieurs cas de figures sont envisageables :
- abandon pur et simple de la transaction ;
- demande de fourniture d'une carte de paiement : la transaction se poursuit alors classiquement en utilisant une carte de paiement et le code confidentiel de la carte de paiement de l'utilisateur.

Lorsque le code confidentiel du procédé de l'invention, saisi à l'occasion de la validation, n'est pas valide, plusieurs cas de figure sont envisageables :
- abandon pur et simple de la transaction ;
- possibilité de faire une nouvelle tentative (jusqu'à trois tentatives par exemple). Si les trois tentatives échouent, le compte de l'utilisateur est bloqué et il ne pourra plus réaliser de paiement par cet intermédiaire. Il devra contacter le fournisseur de service pour réactiver son compte.

Dans un deuxième mode de réalisation de l'invention, la saisie du code confidentiel est optionnelle. En effet, cette saisie est une mesure de sécurité supplémentaire, mais elle n'est pas obligatoire. Elle permet cependant de s'assurer que l'utilisateur dispose bien de cette information. Il est envisagé, dans au moins un autre mode de réalisation, de rendre cette saisie obligatoire uniquement si la transaction excède un certain montant, paramétrable en fonction de l'utilisateur, par exemple lors de sa phase d'enregistrement.

Dans un troisième mode de réalisation, le code n'est pas confidentiel et sert seulement à discriminer (identifier) les données biométriques de l'utilisateur plus rapidement.

### 6.3 Recherche et comparaison des informations

L'identification et l'authentification proprement dite a lieu, lors d'une phase de recherche 12, qui tient compte de la donnée biométrique délivrée par l'utilisateur 10.

La donnée biométrique d'authentification 10 correspond à un échantillon biométrique "simple" de l'utilisateur à authentifier, tel que une empreinte digitale, une empreinte palmaire, une empreinte de rétine, une empreinte d'iris, une forme de visage, etc, ou à une combinaison de plusieurs de ces échantillons "simples", par exemple une combinaison d'une empreinte digitale et d'une empreinte d'iris.

La phase de recherche 12 comprend de manière classique, en plus des étapes précédemment mentionnées, au moins deux étapes : une première étape consistant à déterminer une "signature" biométrique de l'usager à authentifier, à partir de la donnée biométrique d'authentification délivrée, et une deuxième étape consistant à comparer cette "signature" biométrique avec les signatures, ou données biométriques de référence contenues dans une base de données préalablement identifiée, en vue de délivrer une décision d'authentification.

La première étape correspond à l'application d'un traitement spécifique classique à l'échantillon biométrique, de manière à obtenir une signature pouvant être ensuite comparée à d'autres informations du même type. Cette signature est obtenue par des algorithmes de création de signature, connus en soi dans le domaine de la biométrie.

La seconde étape effectue des comparaisons successives de la signature obtenue lors de l'étape précédente, avec chacune des données biométriques de référence, ou signatures de référence stockées dans la base concernée, *uniquement pour les terminaux connectés aux stations de bases de référence.* En fonction de critères prédéterminés, une décision d'authentification est délivrée, positive quand une signature de référence correspond à la signature obtenue, négative quand aucune des signatures de référence contenue dans la base, *uniquement pour les terminaux connectés aux stations de bases de référence,* ne correspond.

Ainsi, on comprend aisément que cette seconde étape d'authentification est plus rapide dans le procédé selon l'invention, car le nombre maximum de comparaisons qu'elle peut effectuer correspond à un nombre de signatures limité, et non au nombre total de signatures stockées dans le système d'authentification.

De plus, un autre avantage du procédé d'authentification de l'invention réside dans la répartition elle-même des données biométriques entre les différentes stations de base.

En effet, le procédé de l'invention minimise les risques de collision, c'est-à-dire les risques d'avoir, pour une même station de base, des données biométriques d'utilisateurs proches susceptibles d'être considérées comme identiques par un système d'authentification. Cet avantage est directement lié à l'utilisation des stations de base et des dispositifs mobiles pour permettre un filtrage et conduire à l'authentification de l'utilisateur.

Selon un mode de réalisation spécifique de l'invention, le terminal transactionnel est directement connecté au réseau de communication mobile de l'opérateur. En effet, dans les modes de réalisation présentés précédemment, le terminal transactionnel est connecté à un réseau par l'intermédiaire d'un accès filaire. Cela signifie que le procédé d'authentification doit mettre en oeuvre une identification de la station de base et des dispositifs mobiles connectés (ou récemment connectés) à cette station de base pour réaliser un filtrage des données biométriques à comparer.

Dans ce mode de réalisation spécifique de l'invention, le terminal transactionnel est lui-même connecté au réseau mobile de l'opérateur de communication. Ainsi, l'obtention de l'identifiant de la station de base et des identifiant des dispositifs mobiles est grandement facilitée : la station de base est celle à laquelle le terminal transactionnel est connecté et les dispositifs mobiles sont ceux qui sont connecté à cette même station de base.

Outre le procédé d'authentification tel que décrit précédemment, l'invention porte également sur un système d'authentification comprenant des moyens de mise en oeuvre du procédé précédemment décrit.

### 6.4. Autres modes de réalisation et caractéristiques complémentaires

### 6.4.1. Transmission du code confidentiel

Selon une caractéristique particulière de l'invention, le code confidentiel saisi par l'utilisateur est transmis à l'opérateur avec les données biométriques (c'est à dire soit en même temps que les données biométriques ou avant les données biométriques). Ceci présente un très grand avantage pratique car cela rend l'identification de l'utilisateur quasi-immédiate.

En effet, lorsque le code confidentiel est transmis à l'opérateur avec l'empreinte, l'opérateur réduit le sous-ensemble de données biométriques de référence à comparer (sous-ensemble déjà très réduit), des utilisateurs présents près de la station de base, à celui des utilisateurs présents près de la station de base et ayant un code confidentiel donné.

La probabilité que deux utilisateurs aient le même code confidentiel est déjà faible (mais elle est non nulle). Dans l'événement rare où une telle collision se produit, cette caractéristique particulière de l'invention permet de départager les deux utilisateurs par la comparaison de leurs empreintes à l'empreinte transmise par le terminal transactionnel. Il est important de noter que même si un unique utilisateur ayant le code confidentiel transmis par le terminal transactionnel a été repéré dans le champ de la station de base, la comparaison des données biométriques reste toujours nécessaire à la validation d'une transaction.

### 6.4.2. Connectivité du terminal transactionnel

Selon un mode de réalisation particulier de l'invention, la position géographique du terminal transactionnel s'infère également, et de manière automatique, de sa prise en charge par une station de base donnée (ceci suppose que le terminal transactionnel est équipé d'une carte SIM, ce qui est très courant). Ceci est important car une telle mise en oeuvre fait abstraction totale de toute notion de coordonnée géographique. Le fait pour des téléphones mobiles d'être dans le champ d'une station de base couvrant aussi un terminal transactionnel signifie que les téléphones mobiles sont à proximité du terminal transactionnel en question. Ceci suffit à la comparaison. Les grands avantages de cette méthode sont :
1. elle ne requiert pas des prises de mesures géographiques sur le terrain ;
2. elle s'adapte de manière automatique à des marchands itinérants qui emportent avec eux un terminal transactionnel mobile et font du porte-à-porte.

### 6.4.3. Extension de la zone de localisation

Selon une caractéristique particulière de l'invention, la comparaison de l'empreinte envoyée par le terminal transactionnel n'est pas limitée aux empreintes des utilisateurs présents dans le champ de la station de base couvrant le terminal transactionnel. Dans une telle variante la comparaison de l'empreinte envoyée par le terminal transactionnel est étendue aux empreintes des utilisateurs présents dans les champs des stations de base adjacentes ou proches de la station couvrant le terminal transactionnel. En effet, il n'est pas rare que pour une raison d'encombrement de réseau un utilisateur puisse être rattaché à une station de base un peu plus éloignée mais moins chargée à un moment donné.

### 6.4.4. Multiplicité des utilisateurs et des terminaux

Selon un mode de réalisation particulier de l'invention, lors de la phase d'enregistrement des utilisateurs, le système permet d'associer plusieurs empreintes digitales au même téléphone (par exemple le même téléphone peut servir à identifier différents membres de la même famille qui utilisent cet appareil à tour de rôle). De même une même empreinte digitale peut tout à fait être associée à plusieurs téléphones (par exemple, une personne peut posséder plusieurs abonnements et payer avec n'importe quel des téléphones possédés).

### 6.4.5. Sélection de l'opérateur mobile

Selon un mode de réalisation particulier de l'invention, le procédé comprend une étape d'identification d'un opérateur de communication vers lequel les données biométriques de l'utilisateur sont transmises. En effet, le problème posé par la multiplication des opérateurs est qu'une fois l'empreinte digitale acquise, le terminal transactionnel doit savoir à quel opérateur il convient de la faire suivre, pour comparaison. Cette identification peut être effectuée selon plusieurs méthodes :
- le terminal transactionnel offre au marchand le choix entre divers opérateurs (e.g. « Opérateur #1 : tapez 1, Opérateur #2 tapez 2, Opérateur #3, tapez 3 »). Le marchand pose la question oralement à l'utilisateur, et saisit, sur le clavier du terminal transactionnel, l'information (ici 1, 2 ou 3) qui permet d'acheminer l'empreinte à un opérateur en particulier à des fins de comparaison.
- ou alors les données biométriques sont transmises de manière automatique à tous les opérateurs qui se chargent de la comparer à leurs propres bases de données.
- ou alors il est demandé à l'utilisateur de saisir son code confidentiel sur le terminal transactionnel avant de transmettre les données biométriques à l'opérateur. Le code confidentiel encode alors une information qui indique de quel opérateur il s'agit (par exemple le dernier chiffre décimal du code confidentiel sera un chiffre caractérisant l'opérateur : 1 pour Opérateur #1, 2 pour Opérateur #2, 3 pour Opérateur #3, etc). Sur la base de cette information encodée dite « identifiant d'opérateur encodé dans le code confidentiel », le terminal transactionnel route les données vers le bon opérateur.
- ou alors le gestionnaire du système crée une base de données centrale regroupant les identifiants biométriques de tous les utilisateurs, quelque soit leur opérateur. Les opérateurs fournissent en temps réel les informations de position approximative de leurs abonnés présents dans la base de données centrale et c'est le gestionnaire du système qui effectue les opérations d'identification de l'empreinte.

Il est important de noter, en tout état de cause, que la présentation du code confidentiel est facultative. Bien entendu, une mise en oeuvre sans code confidentiel génère moins d'avantages, mais elle fonctionnera toujours.

Selon un mode de réalisation particulier de l'invention, lorsque l'utilisateur est un abonné d'un opérateur étranger (OE) ayant un accord d'itinérance (« roaming agreement ») avec un opérateur national (ON), il est procédé de la manière suivante : la présence d'un abonné étranger dans le domaine de la station de base d'un ON est une information connue de l'ON. L'ON effectue alors les deux opérations suivantes (dans un ordre quelconque ou même simultanément, pour gagner du temps) : 1. L'ON cherche les données biométriques et le code confidentiel dans sa base de données. Si les données biométriques et code confidentiel sont trouvés dans la base de données de l'ON, le système procède comme expliqué précédemment. 2. L'ON transmet les données biométriques à comparer et le code confidentiel saisi par l'utilisateur à tous les OEs avec lesquels il a un accord d'itinérance et dont des abonnés sont présents à proximité de la station de base concernée. Les OEs procèdent à la comparaison des données biométriques et du code confidentiel transmis par l'ON avec leurs bases de données. Si les données biométriques et le code confidentiel sont trouvés dans la base de données d'un OE, l'OE en question signale ce fait à l'ON, et le système procède comme expliqué précédemment.

Selon une caractéristique particulière de l'invention, lorsque l'utilisateur est un abonné d'un opérateur étranger (OE) ayant un accord d'itinérance (« roaming agreement ») avec un opérateur national (ON), on procède ainsi : la présence d'un abonné étranger dans le domaine de la station de base d'un ON est une information connue de l'ON. L'ON effectue alors une demande de transfert d'informations à l'OE. Sur réception d'une telle demande de transfert d'informations, l'OE transmet à l'ON les données biométriques de l'abonné ainsi que le code confidentiel associé. Ainsi, l'abonné étranger est ajouté dynamiquement au système de l'ON et cet abonné étranger en cours d'itinérance peut effectuer des opérations de paiement. Afin de ne pas encombrer la base de données de l'ON à long terme, un abonné étranger ainsi ajouté à une base de données d'un ON est effacé de la liste dès lors que l'ON constate son absence sur le territoire national durant une certaine période (par exemple 2 semaines, ceci signifiant par exemple que le touriste est revenu dans son pays).

### 6.4.6. Sélection d'une caractéristique de l'utilisateur

Selon une caractéristique particulière de l'invention, préalablement à la saisie des données biométriques par l'utilisateur, le marchand constate le sexe de l'utilisateur ayant déposé son doigt sur le terminal transactionnel (homme ou femme) et renseigne cette information manuellement dans le terminal transactionnel (par exemple : il appuie sur la touche « 1 » pour homme ou sur « 2 » pour femme). Cette information est transmise à l'opérateur avec les données biométriques. Chaque enregistrement dans la base de données des données biométriques de l'opérateur comporte un champ « sexe ». Ainsi statistiquement, les opérations de comparaison d'empreinte digitales s'effectuent à une vitesse double. Le temps nécessaire à l'authentification est donc statistiquement divisé par deux.

### 6.4.7. Latence ternporelle

Selon un mode de réalisation de l'invention, le procédé met en oeuvre une notion de « latence temporelle de tolérance ». Dans les modes de réalisation précédemment décrits, l'utilisateur se trouve à proximité d'une station de base. Dans ce mode de réalisation de l'invention, le procédé est également adapté aux utilisateurs qui se trouvaient il y peu de temps près d'une station de base (par exemple moins de cinq minutes). Dans un tel mode de réalisation, on tient compte des indicateurs de connexion qui sont positionnés au sein des stations de base et/ou au sein des contrôleurs (BSC pour « Base Station Controler ») et/ou au sein des centraux téléphoniques (les « MSC ») et/ou au sein des registres (VLR pour « Visitor Location Register », HLR pour « Home Location Register ») et autres équipements situés au coeur du réseau (« Core Network »). En effet, lorsque les dispositifs mobiles se déplacent au sein du réseau de communication de l'opérateur, leurs passages au niveau des stations de base sont marqués (par exemple dans le VLR ou le HLR mais également dans d'autres équipements). Ce marquage est notamment utilisé dans le cadre des procédures de « handover », afin d'accélérer la transition du dispositif mobile d'une station de base à une autre. Dans ce mode de réalisation de l'invention, les inventeurs ont eu l'idée d'utiliser ce marquage afin de vérifier la présence récente du dispositif mobile dans la zone de couverture de la station de base.

Par exemple, le fonctionnement est adapté à des situations particulières comme le cas typique d'un parking souterrain où il n'y a pas de réception de signal pour les terminaux de communication mobiles. Le réseau mobile a constaté la présence de l'utilisateur dans le réseau puis l'a perdu. Une minute plus tard une demande de paiement émane du terminal transactionnel du parking et ce alors que l'utilisateur n'est plus détectable.

Dans ce mode de réalisation, l'information de présence de l'utilisateur a été conservée au niveau de la station de base, ou au niveau du réseau de communication, de sorte qu'il est possible, bien que l'utilisateur ne soit plus attaché à la station de base en question, de comparer les données biométriques saisies à celles des utilisateurs dont les signaux ce sont récemment perdus.

L'utilité et l'efficacité du système en utilisant ce mode de réalisation de l'invention sont alors grandement améliorées.

### 6.4.8. Authentification Hors Ligne

Selon une caractéristique particulière de l'invention, une variante du procédé permet de réaliser une authentification en mode « déconnecté ». Dans cette variante le réseau transmet, à intervalle régulier à l'ensemble des terminaux transactionnels a proximité d'un utilisateur donné, les données biométriques et le code confidentiel de cet utilisateur au cas où l'utilisateur se déciderait à utiliser l'un des terminaux transactionnels. Lorsqu'un utilisateur quitte le voisinage d'une station de base, le réseau donne aux terminaux transactionnels concernés, l'ordre d'effacer les données biométriques et le code confidentiel de cet utilisateur.

Ainsi en cas de demande de transaction le terminal transactionnel dispose déjà de toutes les informations nécessaires et peut réaliser l'authentification sans qu'il soit nécessaire de réaliser une connexion.

Ce mode de réalisation est particulièrement adapté dans les cas de surfaces commerciales de faibles densités, comprenant peu de points de paiement et un nombre limité de terminaux mobiles. Selon une caractéristique particulière de l'invention, la transmission des données biométriques et des codes confidentiels aux terminaux transactionnels, dans le cas précédemment exposé est mis en oeuvre lors de l'inactivité du terminal transactionnel. Ainsi on augmente la probabilité de ne pas avoir besoin d'aller en ligne et donc on diminue statistiquement le temps de transaction.

Dans un autre mode de réalisation de l'invention, chaque station de base reçoit et enregistre en permanence les données biométriques et les codes confidentiels des utilisateurs qui sont sous sa gestion. Lorsqu'un utilisateur transite vers une nouvelle station de base, la station de base à laquelle il était précédemment connecté transmet ces données à la nouvelle station de base concomitamment ou subséquemment à la procédure de handover. Ainsi, la nouvelle station de base économise le besoin d'avoir recours au coeur du réseau (« core network ») lors de la mise en oeuvre du procédé d'authentification selon l'invention.

## Revendications

1. Procédé d'authentification biométrique d'un utilisateur (U2) à authentifier parmi une pluralité d'utilisateurs auprès d'un système d'authentification stockant un ensemble de données biométriques de référence associées chacune à un desdits utilisateurs, comprenant les étapes de :
- fourniture (10) par ledit utilisateur à authentifier, d'une donnée biométrique d'authentification, à l'aide d'un dispositif d'obtention de données biométriques d'un terminal transactionnel (TP1);
- recherche (12) parmi un sous-ensemble dudit ensemble de données biométriques de référence stockées par ledit système d'authentification, d'une donnée biométrique de référence correspondant audit utilisateur (U2) à authentifier, en fonction de ladite donnée biométrique d'authentification,
**caractérisé en ce que** ladite étape de recherche comprend une étape de filtrage (12-3) desdites données dudit ensemble de données biométriques en fonction :
- d'une station de base (SB1) d'un réseau de communication mobile (R1); et
- d'un ensemble de dispositifs mobiles (T₁-T₅) pour lesquels un indicateur de connexion est activé pour ladite station de base,
ledit terminal transactionnel (TP1) étant sensiblement proche d'une zone de couverture de ladite station de base (SB1).

2. Procédé d'authentification biométrique, selon la revendication 1, **caractérisé en ce que** ladite étape de filtrage comprend :
- une étape d'identification de ladite station de base couvrant ladite zone de couverture dans laquelle ledit terminal transactionnel se situe ;
- une étape d'identification dudit ensemble de dispositifs mobiles pour lesquels un indicateur de connexion est activé pour ladite station de base, délivrant un ensemble d'identifiants de dispositifs mobiles candidats ;
- une étape d'obtention dudit sous-ensemble dudit ensemble de données biométriques de référence en fonction dudit ensemble d'identifiants des dispositifs mobiles candidats.

3. Procédé d'authentification biométrique selon l'une quelconque des revendications 1 et 2, **caractérisé en ce que** lesdites données biométriques appartiennent au groupe comprenant :
- les empreintes digitales ;
- les empreintes palmaires ;
- les empreintes de rétine ;
- les empreintes d'iris;
- les formes de visage ;
- les combinaisons desdites informations biométriques précitées.

4. Procédé d'authentification biométrique selon l'une quelconque des revendications 2 et 3, **caractérisé en ce que** ladite étape de filtrage comprend en outre une étape de saisie, d'une information représentative du sexe dudit utilisateur.

5. Procédé d'authentification biométrique selon l'une quelconque des revendications 2 à 4, **caractérisé en ce que** ladite étape de filtrage comprend en outre une étape de sélection, d'un opérateur téléphonique auprès duquel le dispositif mobile dudit utilisateur est enregistré.

6. Procédé d'authentification biométrique selon l'une quelconque des revendications 1 à 5, **caractérisé en ce qu'**il comprend en outre une étape de saisie, par ledit utilisateur, d'un code confidentiel.

7. Procédé d'authentification biométrique selon la revendication 6, **caractérisé en ce que** ledit code confidentiel est transmis audit système d'authentification concomitamment audites données biométriques fournies par ledit utilisateur.

8. Procédé d'authentification selon l'une quelconque des revendications 1 à 7, **caractérisé en ce que** ledit terminal transactionnel est un terminal de paiement mobile connecté audit réseau de communication mobile à laquelle appartient ladite station de base.

9. Procédé d'authentification selon l'une quelconque des revendications 1 à 8, **caractérisé en ce que** ledit terminal transactionnel est connecté à ladite station de base.

10. Procédé d'authentification selon l'une quelconque des revendications 1 à 9, **caractérisé en ce qu'**il comprend en outre une étape de transmission, audit terminal transactionnel, dudit sous ensemble dudit ensemble de données biométriques et **en ce que** ladite étape de filtrage est mise en oeuvre au sein dudit terminal transactionnel.

11. Procédé d'authentification selon l'une quelconque des revendications 1 à 9, **caractérisé en ce qu'**il comprend en outre une étape de transmission vers une station de base de destination à laquelle ledit utilisateur est susceptible de se connecter, desdites données biométriques concernant ledit utilisateur, ladite transmission étant réalisée à partir d'une station de base courante à laquelle ledit utilisateur est connecté.

12. Système d'authentification biométrique d'un utilisateur (U2) à authentifier parmi une pluralité d'utilisateurs auprès d'un système d'authentification stockant un ensemble de données biométriques de référence associées chacune à un desdits utilisateurs, comprenant des moyens de :
- fourniture (10) par ledit utilisateur à authentifier, d'une donnée biométrique d'authentification, à l'aide d'un dispositif d'obtention de données biométriques d'un terminal transactionnel (TP1);
- recherche (12) parmi un sous-ensemble dudit ensemble de données biométriques de référence stockées par ledit système d'authentification, d'une donnée biométrique de référence correspondant audit utilisateur (U2) à authentifier, en fonction de ladite donnée biométrique d'authentification,
**caractérisé en ce que** lesdits moyens de recherche comprennent des moyens de filtrage (12-3) desdites données dudit ensemble de données biométriques en fonction :
- d'une station de base (SB1) d'un réseau de communication mobile (R1); et
- d'un ensemble de dispositifs mobiles (T₁-T₅) pour lesquels un indicateur de connexion est activé pour ladite station de base,
ledit dispositif d'obtention de données biométriques étant sensiblement proche d'une zone de couverture de ladite station de base.

13. Produit programme d'ordinateur téléchargeable depuis un réseau de communication (R1) et/ou enregistré sur un support lisible par ordinateur et/ou exécutable par un processeur, **caractérisé en ce qu'**il comprend des instructions de code de programme pour la mise en oeuvre du procédé d'authentification biométrique selon l'une au moins des revendications 1 à 11.

## Patentansprüche

1. Biometrisches Authentifizierungsverfahren eines Benutzers (U2), der unter einer Vielzahl von Benutzern bei einem Authentifizierungssystem authentifiziert werden muss, das eine Menge von biometrischen Bezugsdatensätzen speichert, die jeweils einem der besagten Benutzer zugeordnet sind und die folgenden Schritte umfasst:
- Bereitstellen (10) durch den besagten zu authentifizierenden Benutzer eines biometrischen Authentifizierungsdatensatzes, mit Hilfe einer Vorrichtung zum Erhalten von biometrischen Daten eines transaktionsorientierten Terminals (TP1);
- Suche (12) in einer Untermenge der besagten Menge biometrischer, vom besagten Authentifizierungssystem gespeicherter Bezugsdatensätze, eines biometrischen Bezugsdatensatzes, der dem besagten, zu authentifizierenden Benutzer (U2) zugeordnet ist, als Funktion des besagten Datensatzes biometrischer Authentifizierung,
**dadurch gekennzeichnet, dass** der besagte Suchschritt einen Filterungsschritt (12-3) der besagten Datensätze aus der besagten Menge biometrischer Daten aufweisen, als Funktion von:
- einer Basisstation (SB1) eines mobilen Kommunikationsnetzes (R1), und
- einer Menge mobiler Vorrichtungen (T1 - T5), für welche ein Verbindungsindikator zur besagten Basisstation aktiviert wird,
wobei das besagte transaktionsorientierte Terminal (TP1) sich in relativer Nähe eines von der besagten Basisstation (SB1) abgedeckten Bereiches befindet.

2. Biometrisches Authentifizierungsverfahren nach Anspruch 1, **dadurch gekennzeichnet, dass** der besagte Filterungsschritt folgendes umfasst:
- einen Authentifizierungsschritt der besagten Basisstation, welche den besagten Abdeckungsbereich, in dem sich das besagte transaktionsorientierte Terminal befindet, abdeckt;
- einen Authentifizierungsschritt der besagten Menge mobiler Vorrichtungen, für welche ein Verbindungsindikator zur besagten Basisstation aktiviert wird, der eine Menge von Identifizierungen für zur Wahl stehender mobiler Vorrichtungen liefert;
- einen Schritt zum Erzielen der besagten Untermenge der besagten Menge biometrischer Bezugsdatensätze, als Funktion der besagten Menge von Identifikationskennzeichen der zur Wahl stehenden mobilen Vorrichtungen.

3. Biometrisches Authentifizierungsverfahren nach einem der Ansprüche 1 oder 2, **dadurch gekennzeichnet, dass** die besagten biometrischen Datensätze der folgendes umfassenden Gruppe zugehört:
- Fingerabdrücke,
- Handtellerabdrücke,
- Netzhautabbildungen,
- Irisabbildungen,
- Gesichtsformen,
- Kombinationen der oben erwähnten biometrischen Informationen.

4. Biometrisches Authentifizierungsverfahren nach einem der Ansprüche 2 oder 3, **dadurch gekennzeichnet, dass** der besagte Filterungsschritt darüber hinaus einen Schritt zum Erfassen einer Information aufweist, die für das Geschlecht des besagten Benutzers repräsentativ ist.

5. Biometrisches Authentifizierungsverfahren nach einem der Ansprüche 2 bis 4, **dadurch gekennzeichnet, dass** der besagte Filterungsschritt darüber hinaus eine Schritt zur Wahl eines Telefondienstes aufweist, bei dem die mobile Vorrichtung des besagten Benutzers angemeldet ist.

6. Biometrisches Authentifizierungsverfahren nach einem der Ansprüche 1 bis 5, **dadurch gekennzeichnet, dass** es darüber hinaus einen Schritt zum Erfassen eines vertraulichen Codes durch den besagten Benutzer aufweist.

7. Biometrisches Authentifizierungsverfahren nach Anspruch 6, **dadurch gekennzeichnet, dass** der besagte vertrauliche Code dem besagten Authentifizierungssystem zusammen mit den vom besagten Benutzer bereitgestellten biometrischen Daten bereitgestellt wird.

8. Biometrisches Authentifizierungsverfahren nach einem der Ansprüche 1 bis 7, **dadurch gekennzeichnet, dass** es sich beim besagten transaktionsorientierten Terminal um ein mobiles Zahlungsterminal handelt, das mit dem besagten mobilen Kommunikationsnetz verbunden ist, zu dem die besagte Basisstation gehört.

9. Biometrisches Authentifizierungsverfahren nach einem der Ansprüche 1 bis 8, **dadurch gekennzeichnet, dass** das besagte transaktionsorientierte Terminal mit der besagten Basisstation verbunden ist.

10. Biometrisches Authentifizierungsverfahren nach einem der Ansprüche 1 bis 9, **dadurch gekennzeichnet, dass** es darüber hinaus einen Schritt zum Senden der besagten Untermenge der besagten Menge biometrischer Datensätze an das besagte transaktionsorientierte Terminal aufweist und, dass der besagte Filterungsschritt innerhalb des besagte transaktionsorientierten Terminals eigesetzt wird.

11. Biometrisches Authentifizierungsverfahren nach einem der Ansprüche 1 bis 9, **dadurch gekennzeichnet, dass** es darüber hinaus einen Schritt zum Senden der besagten, den besagten Benutzer betreffende biometrische Daten an eine Zielbasisstation aufweist, mit welcher der besagte Benutzer sich in Verbindung setzen kann, wobei das besagte Senden ausgehend von einer Basisstation erfolgt, mit welcher der besagte Benutzer üblicherweise in Verbindung steht.

12. Biometrisches Authentifizierungssystem eines Benutzers (U2), der unter einer Vielzahl von Benutzern bei einem Authentifizierungssystem authentifiziert werden muss, das eine Menge von biometrischen Bezugsdatensätzen speichert, die jeweils einem der besagten Benutzer zugeordnet sind und die folgenden Schritte umfasst:
- Bereitstellen (10) durch den besagten zu authentifizierenden Benutzer eines biometrischen Authentifizierungsdatensatzes, mit Hilfe einer Vorrichtung zum Erhalten von biometrischen Daten eines transaktionsorientierten Terminals (TP1);
- Suche (12) in einer Untermenge der besagten Menge biometrischer, vom besagten Authentifizierungssystem gespeicherter Bezugsdatensätze, eines biometrischen Bezugsdatensatzes, der dem besagten, zu authentifizierenden Benutzer (U2) zugeordnet ist, als Funktion des besagten Datensatzes biometrischer Authentifizierung,
**dadurch gekennzeichnet, dass** die besagten Suchmittel Filterungsschritte (12-3) der besagten Datensätze aus der besagten Menge biometrischer Daten aufweisen, als Funktion von:
- einer Basisstation (SB1) eines mobilen Kommunikationsnetzes (R1), und
- einer Menge mobiler Vorrichtungen (T1 - T5), für welche ein Verbindungsindikator zur besagten Basisstation aktiviert wird,
wobei die besagte Vorrichtung zum Erhalten biometrischer Daten sich in relativer Nähe eines von der besagten Basisstation abgedeckten Bereiches befindet.

13. EDV-Programm, das als Produkt aus einem Kommunikationsnetz (R1) heruntergeladen werden kann und/oder auf einen von einem Rechner lesbaren Datenträger gespeichert und/oder von einem Prozessor ausgeführt werden kann, **dadurch gekennzeichnet, dass** es über Programmcodebefehle verfügt, um das biometrische Authentifizierungsverfahren nach mindestens einem der Ansprüche 1 bis 11 zum Einsatz zu bringen.

## Claims

1. Method of biometric authentication of a user to be authenticated, from among a plurality of users, with an authentication system storing a set of pieces of reference biometric data, each associated with one of said users, the method including steps for:
- the providing, by said user to be authenticated, of a piece of biometric authentication data by means of a device for obtaining biometric data from a transactional terminal;
- searching, in a subset of said set of pieces of reference biometric data stored by said authentication system, for a piece of reference biometric data corresponding to said user to be authenticated, as a function of said piece of biometric authentication data,
**characterized in that** said step for searching comprises a step for filtering said pieces of data of said set of pieces of biometric data as a function of:
- a base station of a mobile communications network ; and
- a set of mobile devices for which a connection indicator is activated for said base station,
said transactional terminal being substantially near a zone of coverage of said base station.

2. Method of biometric authentication according to claim 1, **characterized in that** said filtering step comprises:
- a step for identifying said base station covering said coverage zone in which said transactional terminal is situated;
- a step for identifying said set of mobile devices for which a connection indicator is activated for said base station, delivering a set of identifiers of candidate mobile devices;
- a step for obtaining said subset of said set of pieces of reference biometric data as a function of said set of identifiers of the candidate mobile devices.

3. Method of biometric authentication according to any one of the claims 1 and 2, **characterized in that** said pieces of biometric data belong to the group comprising:
- fingerprints;
- palm prints;
- retinal prints;
- iris prints;
- facial shapes;
- combinations of said pieces of biometric information mentioned here above.

4. Method of biometric authentication according to any one of the claims 2 and 3, **characterized in that** said filtering step further comprises a step for entering a piece of information representing the sex of said user.

5. Method of biometric authentication according to any one of the claims 2 to 4, **characterized in that** said filtering step further comprises a step for selecting a telephone operator with whom said user's said mobile device is registered.

6. Method of biometric authentication according to any one of the claims 1 to 5, **characterized in that** it further comprises a step for the entering, by said user, of a confidential code.

7. Method of biometric authentication according to claim 6, **characterized in that** said confidential code is transmitted to said authentication system concomitantly with said pieces of biometric data provided by said user.

8. Method of authentication according to any one of the claims 1 to 7, **characterized in** said transactional terminal is a mobile payment terminal connected to said mobile communications network to which said base station belongs.

9. Method of authentication according to any one of the claims 1 to 8, **characterized in that** said transactional terminal is connected to said base station.

10. Method of authentication according to any one of the claims 1 to 9, **characterized in that** it further comprises a step for transmitting, to said transactional terminal, said subset of said set of pieces of biometric data and said filtering step is implemented within said transactional terminal.

11. Method of authentication according to any one of the claims 1 to 9, **characterized in that** it further comprises a step for transmitting, to a destination base station to which said user is liable to get connected, pieces of biometric data on said user, said transmitting being done through a current base station to which said user is connected.

12. System for the biometric authentication of a user to be authenticated, from among a plurality of users, with an authentication system storing a set of pieces of reference biometric data, each associated with one of said users, comprising means for:
- the providing, by said user to be authenticated, of a piece of biometric authentication data by means of a device for obtaining biometric data from a transactional terminal;
- searching, in a subset of said set of pieces of reference biometric data stored by said authentication system, for a piece of reference biometric data corresponding to said user to be authenticated, as a function of said piece of biometric authentication data,
**characterized in that** said means for searching comprise means for filtering said pieces of data of said set of pieces of biometric data as a function of:
- a base station of a mobile communications network ; and
- a set of mobile devices for which a connection indicator is activated for said base station,
said device for obtaining biometric data being substantially near a zone of coverage of said base station.

13. Computer program product downloadable from a communications network and/or recorded on a computer-readable carrier and/or executable by a processor, **characterized in that** it comprises program code instructions to implement the method of biometric authentication according to at least one of the claims 1 to 11.
